# EUROPEAN PATENT APPLICATION

(11) **EP 4 726 468 A1**
(43) Date of publication of application: **15.04.2026**
(21) Application number: 24839949.5
(22) Date of filing: 27.06.2024
(51) Int. Cl.: G03B 13/36, G03B 3/10, G03B 5/06, G03B 17/12, H04N 23/54, H04N 23/55, H04N 23/51, H02K 41/035

(54) **CAMERA MODULE AND ELECTRONIC DEVICE COMPRISING CAMERA MODULE**

(30) Priority: 12.07.2023 KR 20230090676; 16.08.2023 KR 20230106928
(71) Applicant: Samsung Electronics Co., Ltd., Suwon-si, Gyeonggi-do 16677 (KR)
(72) Inventor: YU, Youngbok, Suwon-si, Gyeonggi-do 16677 (KR); AN, Hyosang, Suwon-si, Gyeonggi-do 16677 (KR)
(74) Representative: Appleyard Lees IP LLP
(86) International application number: PCT/KR2024/008933
(87) International publication number: WO 2025/014135

(57) **Abstract**

An electronic device according to an embodiment of the present disclosure may comprise a lens assembly including at least one lens. In addition, the electronic device may comprise an auto focus (AF) structure in which at least a portion of the lens assembly is located, the AF structure being configured to move in the optical axis direction of the lens and comprising at least one AF guide unit and a side area. In addition, the electronic device may comprise a camera housing in which the AF structure is disposed. In addition, the electronic device may comprise an AF magnet disposed in the AF guide unit. In addition, the electronic device may comprise an AF coil disposed in the camera housing so as to face the AF magnet. In addition, the electronic device may comprise a first AF ball disposed between the AF structure and the camera housing so as to guide the movement of the AF structure with respect to the camera housing in the optical axis direction. In addition, the electronic device may comprise at least one second AF ball disposed between the AF structure and the camera housing. Various other embodiments are possible.

## Description

### [Technical Field]

Embodiments disclosed herein relate to a camera module and an electronic device including the camera module.

### [Background Art]

Various electronic devices, such as a smartphone, a tablet PC, a portable multimedia player (PMP), a personal digital assistant (PDA), a laptop personal computer (PC), and a wearable device such as a wrist watch or a head-mounted display (HMD), may include a camera and may capture an image using the camera.

As the number of users capturing photos or videos using electronic devices increases, the performance of cameras included in electronic devices is also improving. For example, when capturing an image using a camera included in an electronic device, in order to obtain a clear image, it may be necessary to adjust the focus of the subject or to compensate for shaking (e.g., hand tremors) that may occur when taking a picture of the subject.

A camera module used in an electronic device may include an autofocus (AF) function that automatically adjusts the focus of a lens on a subject and/or an optical image stabilizer (OIS) function that compensates for shaking occurring in the camera module when taking a picture of a subject. The AF function and the OIS function of the camera module may be driven based on electromagnetic force using a magnet and a coil.

The above-described information may be provided as related art for the purpose of assisting in understanding the disclosure. No assertion or decision is made as to whether any of the above might be applicable as prior art with regard to the disclosure.

### [Disclosure of Invention]

### [Technical Problem]

A camera module may include an auto focus (AF) structure used for an AF function of automatically adjusting a focus of a lens with respect to a subject, and an optical image stabilizer (OIS) structure used for an OIS function of compensating for shaking of an image. The AF structure and the OIS structure may be driven based on electromagnetic force using a magnet and a coil.

The camera module may have a structure in which the AF structure is disposed inside a camera housing, and the OIS structure in which the lens is inserted into the AF structure is disposed. According to an embodiment, the AF structure may move in an optical axis direction of the lens with respect to the camera housing by being brought into contact with a driving ball disposed between the AF structure and the camera housing as electromagnetic force acts between the coil disposed on the camera housing and the magnet disposed on the AF structure. The OIS structure may move in a direction substantially perpendicular to the optical axis with respect to the AF structure by being brought into contact with a driving ball disposed between the AF structure and the OIS structure as electromagnetic force acts between another coil disposed on the camera housing and a magnet disposed on the OIS structure.

The AF structure may be disposed in the camera housing to be spaced apart by a predetermined distance from one side surface of the camera housing so as to move in the optical axis direction with respect to the camera housing. The OIS structure may be disposed in the AF structure to be spaced apart by a predetermined distance from one side surface of the AF structure so as to move in a direction substantially perpendicular to the optical axis with respect to the AF structure. In addition, the magnet disposed on the OIS structure may be spaced apart by a predetermined distance from the camera housing so as not to be in contact with the coil disposed on the camera housing.

Meanwhile, when an external impact (e.g., a drop of the electronic device) is applied to the camera module, the AF structure may collide with one side surface of the camera housing. Accordingly, at least one of the AF structure and the camera housing may be damaged. In addition, the OIS structure may move toward one side surface of the camera housing in the same direction as the AF structure. In such a case, the magnet disposed on the OIS structure and the coil disposed on the camera housing may collide with each other. Accordingly, at least one of the magnet disposed on the OIS structure and the coil disposed on the camera housing may be damaged.

According to an embodiment of the disclosure, when an impact is applied to the camera module, a distance by which the AF structure moves with respect to the camera housing may be reduced so as to reduce an impact of the AF structure with respect to the camera housing.

The technical subjects pursued in the disclosure may not be limited to the above-mentioned technical subjects, and other technical subjects which are not mentioned herein may be clearly understood from the following description by those skilled in the art to which the disclosure pertains.

### [Solution to Problem]

According to an embodiment of the disclosure, an electronic device may include a lens assembly including at least one lens. The electronic device may further include an AF structure in which at least a portion of the lens assembly is positioned. The AF structure may be configured to move in an optical axis direction of the lens and including at least one auto focus (AF) guide portion and a side surface area. The electronic device may further include a camera housing in which the AF structure is disposed. The electronic device may further include an AF magnet disposed on the AF guide portion. The electronic device may further include an AF coil disposed on the camera housing to face the AF magnet. The electronic device may further include a first AF ball disposed between the AF structure and the camera housing to guide movement of the AF structure with respect to the camera housing in the optical axis direction. The electronic device may further include at least one second AF ball disposed between the AF structure and the camera housing.

According to an embodiment of the disclosure, a camera module may include a lens assembly including at least one lens. The camera module may further include an AF structure in which at least a portion of the lens assembly is positioned. The AF structure may be configured to move in an optical axis direction of the lens and including at least one auto focus (AF) guide portion and a side surface area. The camera module may further include a camera housing in which the AF structure is disposed. The camera module may further include an AF magnet disposed on the AF guide portion. The camera module may further include an AF coil disposed on the camera housing to face the AF magnet. The camera module may further include a first AF ball disposed between the AF structure and the camera housing to guide movement of the AF structure with respect to the camera housing in the optical axis direction. The camera module may further include at least one second AF ball disposed between the AF structure and the camera housing.

### [Advantageous Effects of Invention]

According to an embodiment of the disclosure, an impact between a camera housing and an AF structure may be reduced by decreasing the distance between the camera housing and the AF structure. For example, between the AF structure and the camera housing, a driving ball (e.g., a first AF ball) that guides movement of the AF structure in an optical axis direction, and another driving ball (e.g., a second AF ball) may be disposed. When an impact is applied to the camera module, a distance by which the AF structure may move with respect to the camera housing may be reduced by a space occupied by the other driving ball between the camera housing and the AF structure, which may reduce an acceleration when the AF structure moves toward the camera housing. Accordingly, an impact between the AF structure and the camera housing may be reduced.

In addition, as the spacing distance between the AF structure and the camera housing is reduced, a distance between a coil disposed on the camera housing and a magnet disposed on the OIS structure may be reduced. Accordingly, strength of electromagnetic force acting between the coil disposed on the camera housing and the magnet disposed on the OIS structure may be increased, and a driving force for moving the OIS structure may be increased.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

With regard to the description of the drawings, the same or like reference signs may be used to designate the same or like elements.
FIG. 1 is a block diagram of an electronic device according to various embodiments of the disclosure in a network environment.
FIG. 2 is a block diagram exemplifying a camera module according to various embodiments.
FIG. 3 is a view illustrating a state in which an AF structure assembled with a lens assembly according to an embodiment of the disclosure is coupled to a camera housing.
FIG. 4A is an exploded perspective view of a camera module according to an embodiment of the disclosure.
FIG. 4B is a view illustrating a stacking relationship of an OIS structure, an AF structure, and a camera housing shown in FIG. 4A.
FIG. 5A is a cross-sectional view taken along line A-A of FIG. 3, according to an embodiment of the disclosure.
FIG. 5B is a view illustrating a second AF ball disposed between the AF structure and the camera housing according to an embodiment of the disclosure.
FIGS. 6A and 6B are views each illustrating a seating groove formed in the AF structure according to an embodiment of the disclosure.
FIG. 7 is a view illustrating a distance between one surface of the seating groove formed in the AF structure and the camera housing according to an embodiment of the disclosure.
FIG. 8A is a view illustrating a state in which an AF structure assembled with a lens assembly is coupled to a camera housing according to an embodiment.
FIG. 8B is a perspective view illustrating coupling of a lens assembly, an AF structure, and a camera housing illustrated in FIG. 8A.

### [Mode for the Invention]

In the following description, various embodiments of the disclosure will be described with reference to the accompanying drawings. It should be appreciated that the embodiments and the terms used therein are not intended to limit the technological features set forth herein to particular embodiments and the disclosure includes various changes, equivalents, or alternatives for a corresponding embodiment.

With regard to the description of the drawings, similar reference numerals may be used to designate similar or relevant elements. A singular form of a noun corresponding to an item may include one or more of the items, unless the relevant context clearly indicates otherwise.

As used herein, each of such phrases as "A or B," "at least one of A and B," "at least one of A or B," "A, B, or C," "at least one of A, B, and C," and "at least one of A, B, or C" may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

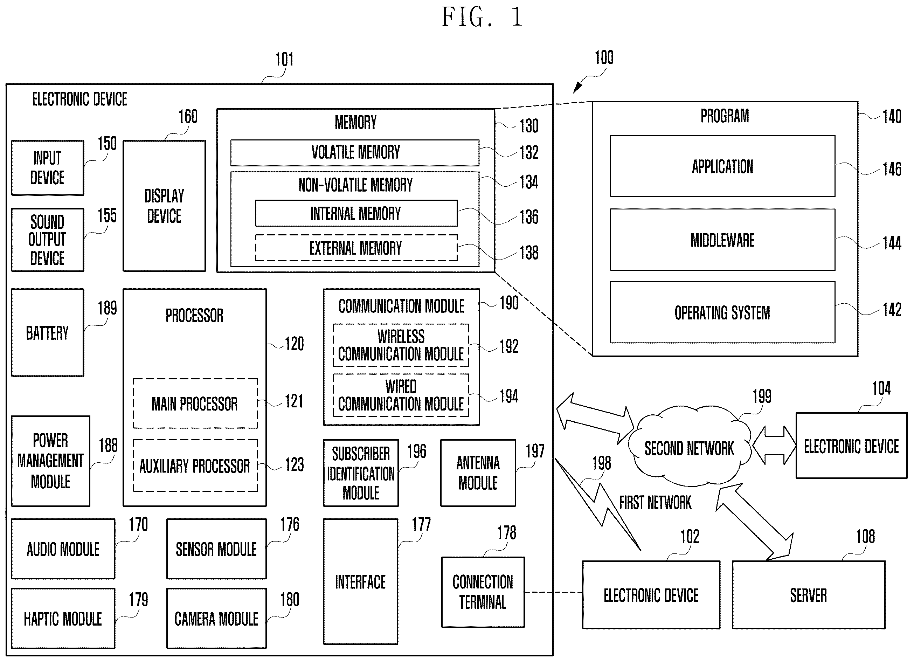

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

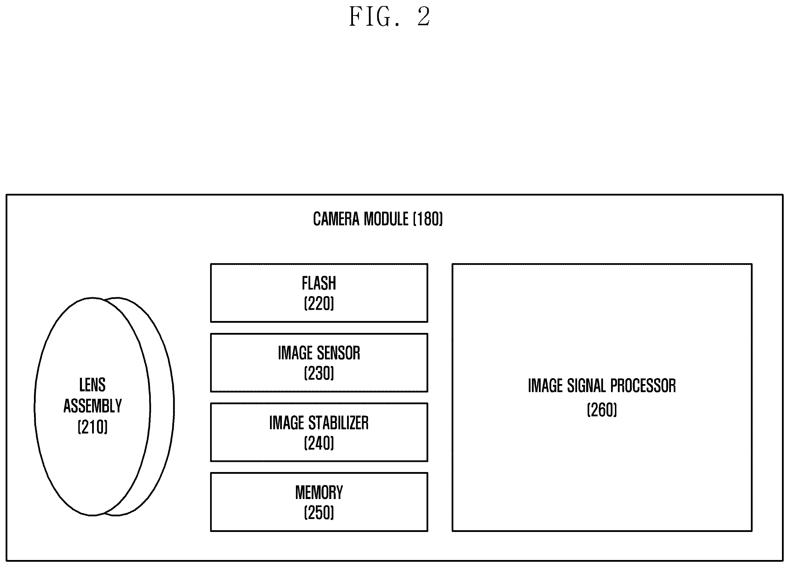

Fig. 2 is a block diagram 200 illustrating the camera module 180 according to various embodiments. Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules180 may form a telephoto camera. Similarly, at least one of the plurality of camera modules 180 may form, for example, a front camera and at least another of the plurality of camera modules180 may form a rear camera.

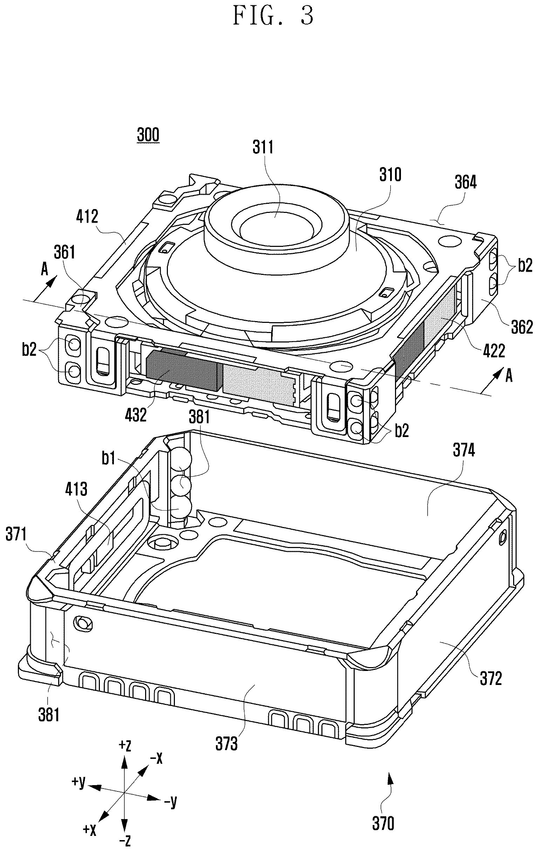

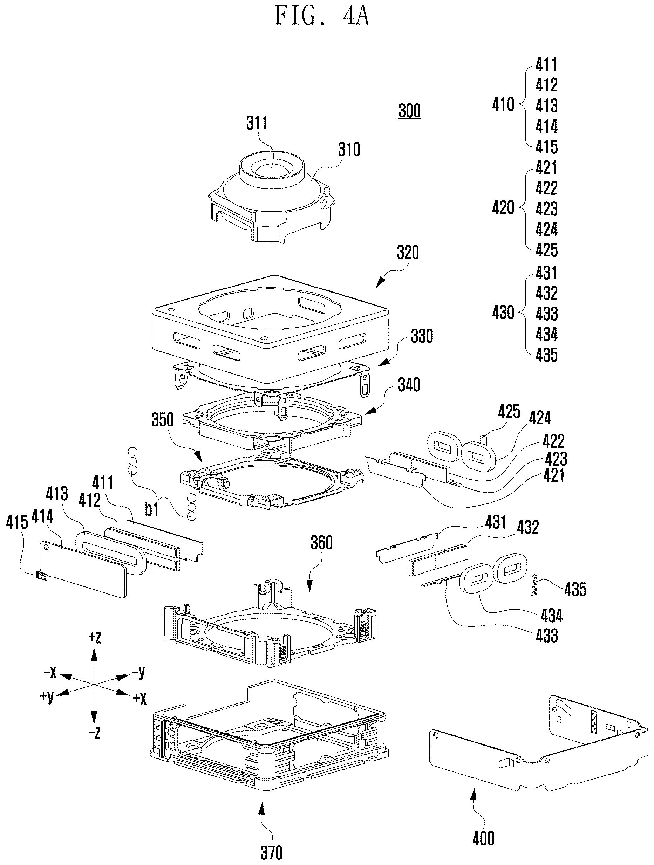

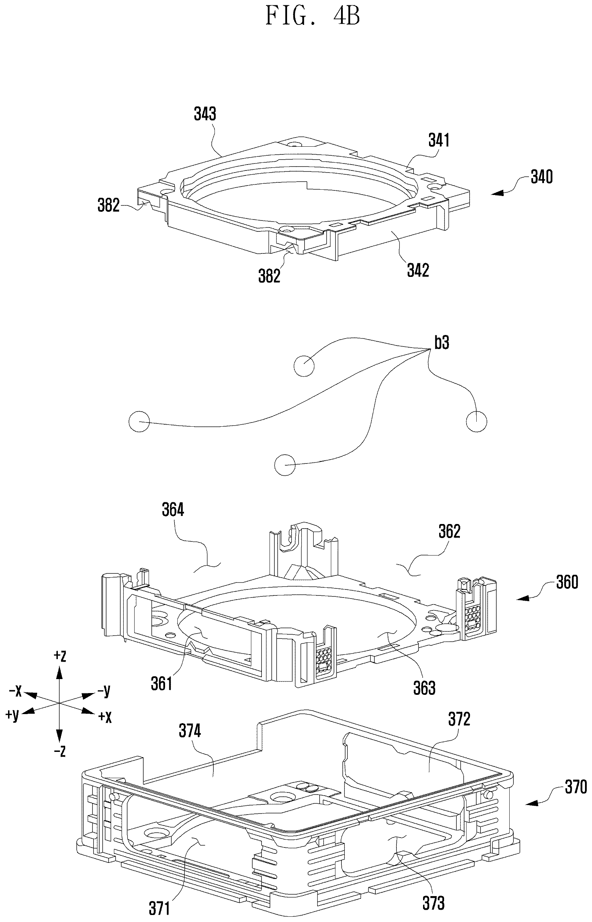

FIG. 3 is a view illustrating a state in which an AF structure assembled with a lens assembly according to an embodiment of the disclosure is coupled to a camera housing. FIG. 4A is an exploded perspective view of a camera module according to an embodiment of the disclosure. FIG. 4B is a view illustrating a stacking relationship of an OIS structure, an AF structure, and a camera housing shown in FIG. 4A.

A camera module 300 (e.g., the camera module 180 of FIG. 2) according to an embodiment of the disclosure may include a lens assembly 310, a shield can 320, a stopper 330, an optical image stabilizer (OIS) structure 340, a middle guide 350, an auto focus (AF) structure 360, a camera housing 370, an AF actuator 410, a first OIS actuator 420, a second OIS actuator 430, a flexible printed circuit board (FPCB) 400, a plurality of AF balls b1, and a plurality of OIS balls b3. At least one of the above-described components may be omitted or another component may be added.

According to an embodiment, as illustrated in FIGS. 3, 4A, and 4B, the AF structure 360 may be disposed inside the camera housing 370 of the camera module 300. The OIS structure 340 may be disposed on the AF structure 360 in a state in which the lens assembly 310 is accommodated. In an embodiment, the OIS structure 340 may include an opening into which the lens assembly 310 is inserted. In an embodiment, the AF structure 360 may provide a space in which the OIS structure 340 is seated by having an upper surface opened so that the OIS structure 340 is inserted. The camera housing 370 may provide a space in which the AF structure 360 is seated by having an upper surface opened so that the AF structure 360 is inserted. In an embodiment, the AF structure 360 may be disposed spaced apart by a predetermined distance from one surface of the camera housing 370 so as to adjust a focus on a subject by moving in an optical axis direction of a lens 311 of the lens assembly 310 (e.g., the Z-axis direction of FIG. 3). The OIS structure 340 may be disposed spaced apart by a predetermined distance from one surface of the AF structure 360 so as to compensate for shaking of an image by moving in a direction substantially perpendicular to the optical axis (e.g., the X-axis or Y-axis direction of FIG. 3).

In an embodiment, referring to FIGS. 3, 4A, and 4B, the camera housing 370 may prevent and protect the OIS structure 340, the middle guide 350, and the AF structure 360 from being separated due to movement. In an embodiment, the camera housing 370 may be positioned inside the shield can 320 and may be coupled or fitted to the shield can 320. In an embodiment, the camera housing 370 may be at least partially coupled to the OIS structure 340, the middle guide 350, and the AF structure 360.

In an embodiment, referring to FIGS. 3, 4A, and 4B, the AF structure 360 may include an AF guide portion 361 in which one component of an AF actuator 410 is disposed, and a side surface area 362, 363, 364 surrounding the AF guide portion 361. In an embodiment, the side surface area 362, 363, 364 may include a first side surface 362 facing the AF guide portion 361, a second side surface 363 disposed between the AF guide portion 361 and the first side surface 362, and a third side surface 364 disposed between the AF guide portion 361 and the first side surface 362 and facing the second side surface 363.

In an embodiment, referring to FIGS. 3, 4A, and 4B, the OIS structure 340 may include a first OIS guide portion 341 facing the first side surface 362 of the AF structure 360, a second OIS guide portion 342 facing the second side surface 363 of the AF structure 360, and/or a third OIS guide portion 343 facing the third side surface 364 of the AF structure 360.

In an embodiment, referring to FIGS. 3, 4A, and 4B, the camera housing 370 may include a first surface 371 facing the AF guide portion 361 and configured to dispose one component of the AF actuator 410 (e.g., an AF coil) therein, a second surface 372 facing the first side surface 362 of the AF structure 360 and configured to dispose one component of the first OIS actuator 420 (e.g., a first OIS coil 424) therein, a third surface 373 facing the second side surface 363 of the AF structure 360 and configured to dispose one component of the second OIS actuator 430 (e.g., a second OIS coil 434) therein, and a fourth surface 374 facing the third side surface 364 of the AF structure 360.

In an embodiment, referring to FIG. 4A, the lens assembly 310 may be assembled by aligning at least one lens 311. The lens assembly 310 may be a lens barrel in which the at least one lens 311 is assembled.

According to an embodiment, referring to FIG. 4A, the shield can 320 may be positioned at an outermost side of the camera module 300 to surround the stopper 330, the OIS structure 340, the middle guide 350, the AF structure 360, and the camera housing 370. In an embodiment, the shield can 320 may block or reduce electromagnetic waves generated from the outside to reduce malfunction of the camera module 300.

In an embodiment, referring to FIG. 4A, the stopper 330 may be coupled or fitted to the AF structure 360. The stopper 330 may prevent the OIS structure 340 from being separated from the AF structure 360. In an embodiment, the stopper 330 may include an opening corresponding to the lens assembly 310.

In an embodiment, referring to FIG. 4A, the middle guide 350 may prevent the OIS structure 340 and/or the lens assembly 310 from rotating when the OIS structure 340 moves along an x-axis and/or a y-axis for shake compensation.

According to an embodiment, the camera module 300 may adjust focus by moving the AF structure 360 under control of a processor 120. In an embodiment, the AF structure 360 may move in the optical axis direction of the lens 311 of the lens assembly 310 (e.g., the Z-axis direction with reference to FIG. 3) with respect to the camera housing 370 via an AF actuator 410. In an embodiment, the AF actuator 410 may include an AF coil 413 disposed on the camera housing 370 and an AF magnet 412 disposed on the AF structure 360. The AF structure 360 may perform an auto focus (AF) function of automatically adjusting the focus of the lens on a subject by moving in the optical axis direction using electromagnetic force acting between the AF coil 413 and the AF magnet 412.

According to an embodiment, the camera module 300 may compensate for shaking of an image by moving the OIS structure 340 under the control of the processor 120. In an embodiment, the OIS structure 340 may move in a direction substantially perpendicular to the optical axis (e.g., the X-axis direction or the Y-axis direction with reference to FIG. 3) with respect to the AF structure 360 via the first OIS actuator 420 and the second OIS actuator 430. In an embodiment, the first OIS actuator 420 may include a first OIS coil 424 disposed on the second surface 372 of the camera housing 370 and a first OIS magnet 422 disposed on the first OIS guide portion 341 of the OIS structure 340. The OIS structure 340 may move in the Y-axis direction substantially perpendicular to the optical axis using electromagnetic force acting between the first OIS coil 424 and the first OIS magnet 422. In an embodiment, the second OIS actuator 430 may include the second OIS coil 434 disposed on the third surface 373 of the camera housing 370 and the second OIS magnet 432 disposed on the second OIS guide portion 342 of the OIS structure 340. The OIS structure 340 may move in the X-axis direction substantially perpendicular to the optical axis using electromagnetic force acting between the second OIS coil 434 and the second OIS magnet 432. Accordingly, the OIS structure 340 may perform an optical image stabilizer function of compensating for shaking of an image through electromagnetic force acting between the OIS coils 424 and 434 and the OIS magnets 422 and 432.

In the above description, the camera module 300 has been described on the premise that it includes the first OIS actuator 420 and the second OIS actuator 430, but the disclosure is not limited thereto. In an embodiment, a third OIS actuator (not illustrated) may include a third OIS coil (not illustrated) disposed on the fourth surface 374 of the camera housing 370 and a third OIS magnet (not illustrated) disposed on the third OIS guide portion 343 of the OIS structure 340. The OIS structure 340 may move in the X-axis direction substantially perpendicular to the optical axis using electromagnetic force acting between the third OIS coil and the third OIS magnet. In an embodiment, the camera module 300 may include the second OIS actuator 430 and the third OIS actuator. In an embodiment, the second OIS actuator 430 may move the OIS structure 340 in the X-axis direction (e.g., the X-axis direction of FIG. 3) using electromagnetic force, and the third OIS actuator may move the OIS structure 340 in the Y-axis direction (e.g., the Y-axis direction of FIG. 3) using electromagnetic force. However, hereinafter, for convenience of description, description will be made on the premise that the camera module 300 includes the first OIS actuator 420 and the second OIS actuator 430.

According to an embodiment, as illustrated in FIG. 4A, the FPCB 400 may surround the outer periphery of the camera housing 370. In an embodiment, the FPCB 400 may be electrically connected to the AF coil 413, the first OIS coil 424, and the second OIS coil 434. When a signal is applied through the FPCB 400, a current may flow through the AF coil 413, the first OIS coil 424, and the second OIS coil 434. Accordingly, the AF structure 360 may move in an optical axis direction (e.g., the Z-axis direction with reference to FIG. 4A) with respect to the camera housing 370 using electromagnetic force acting between the AF magnet 412 and the AF coil 413. In addition, the OIS structure 340 may move in the Y-axis direction with respect to the AF structure 360 using electromagnetic force acting between the first OIS magnet 422 and the first OIS coil 424. In addition, the OIS structure 340 may move in the X-axis direction with respect to the AF structure 360 using electromagnetic force acting between the second OIS magnet 432 and the second OIS coil 434.

According to an embodiment, one or more AF balls b1 may be disposed between the AF structure 360 and the camera housing 370. In an embodiment, the AF balls b1 may be bearing balls. In an embodiment, the AF balls b1 may guide movement of an AF structure 360 when the AF structure 360 is moved with respect to the camera housing 370 using electromagnetic force between the AF magnet 412 and the AF coil 413. For example, the AF balls b1 may guide movement of the AF structure 360 in the Z-axis direction with respect to the camera housing 370.

In an embodiment, the first AF balls b1 may be disposed in a first guide groove 381 formed to extend in the optical axis direction in at least one of the camera housing 370 and the AF structure 360. In an embodiment, the first guide groove 381 may include a (1-1)^{th} guide groove formed in the camera housing 370 and a (1-2)^{th} guide groove formed in the AF structure 360. In an embodiment, the first guide groove 381 may be formed on opposite sides of the AF magnet 412 (e.g., opposite sides in the x-axis direction) with reference to the AF actuator 410. In an embodiment, the first AF ball b1 may be arranged in the optical axis direction in the first guide groove 381 to guide movement of the AF structure 360 in the optical axis direction with respect to the camera housing 370.

According to an embodiment, as illustrated in FIG. 4B, one or more OIS balls b3 may be disposed between the AF structure 360 and the OIS structure 340. In an embodiment, each of a plurality of OIS balls b3 may be a bearing ball. The OIS balls b3 may guide movement of the OIS structure 340 when the OIS structure 340 is moved with respect to the AF structure 360 using electromagnetic force of the first OIS actuator 420 and/or the second OIS actuator 430. In an embodiment, the OIS balls b3 may guide movement of the OIS structure 340 in the X-axis direction and movement in the Y-axis direction depending on the movement of the OIS structure 340 with respect to the AF structure 360.

In an embodiment, there may be three or more OIS balls b3, and may be disposed at positions corresponding to four corners of the OIS structure 340 having a substantially rectangular shape. In an embodiment, the OIS balls b3 may be disposed in a second guide groove 382 formed to extend in a direction substantially perpendicular to an optical axis (e.g., the X-axis direction or the Y-axis direction of FIG. 4A) in at least one of the AF structure 360 and the OIS structure 340. In an embodiment, the second guide groove 382 may include a (2-1)^{th} guide groove formed in the AF structure 360 and a (2-2)^{th} guide groove formed in the OIS structure 340. The OIS balls b3 may be disposed in the second guide groove 382 to guide the movement of the OIS structure 340 in the X-axis direction or the Y-axis direction with respect to the AF structure 360.

According to an embodiment, as illustrated in FIG. 4A, the AF actuator 410 may include an AF magnet insert yoke 411, an AF magnet 412, an AF coil 413, an AF back yoke 414, and at least one AF magnet detection sensor 415. In an embodiment, the AF actuator 410 may be at least partially disposed in a camera housing 370 and an AF guide portion 361 of an AF structure 360. In an embodiment, the AF magnet insert yoke 411 and the AF magnet 412 may be sequentially disposed in the AF guide portion 361. On the first surface 371 of the camera housing 370 facing the AF guide portion 361, the AF coil 413 and the AF back yoke 414 may be sequentially disposed.

In an embodiment, the AF magnet insert yoke 411 and the AF back yoke 414 may prevent magnetic flux of the AF magnet 412 from leaking. In an embodiment, the AF magnet insert yoke 411 and the AF back yoke 414 may include a metallic material and may allow the AF structure 360 to be held in position in the camera housing 370 through magnetic force with the AF magnet 412. For example, since the AF magnet 412 and the AF coil 413 are disposed between the AF magnet insert yoke 411 and the AF back yoke 414, electromagnetic force may be concentrated between the AF magnet 412 and the AF coil 413. Accordingly, the AF structure 360 may be coupled to the camera housing 370 through magnetic force.

In an embodiment, the at least one AF magnet detection sensor 415 may be disposed in a hole or a center of the AF coil 413. In an embodiment, the at least one AF magnet detection sensor 415 may detect a position of the AF magnet 412. For example, at least one AF magnet detection sensor 415 may include at least one driving IC (not illustrated). A driving IC (not illustrated) may control current passing through the AF coil 413 to change electromagnetic force between the AF magnet 412 and the AF coil 413, so as to control the AF structure 360 to move along an optical axis direction.

According to an embodiment, the first OIS actuator 420 may include a first OIS back yoke 421, a first OIS magnet 422, a first OIS yoke 423, a first OIS coil 424, and at least one first OIS magnet detection sensor 425.

In an embodiment, the first OIS actuator 420 may be at least partially disposed in the camera housing 370 and the OIS structure 340. In an embodiment, one component of the first OIS actuator 420 may be disposed on the first OIS guide portion 341 so as to move the OIS structure 340 in the Y-axis direction. For example, the first OIS back yoke 421 and the first OIS magnet 422 may be sequentially disposed on the first OIS guide portion 341. On the second surface 372 of the camera housing 370 facing the first OIS guide portion 341, the first OIS coil 424 and the first OIS yoke 423 may be sequentially disposed. The OIS structure 340 may move in a direction (e.g., a Y-axis direction with reference to FIG. 4A) substantially perpendicular to the optical axis (e.g., a Z-axis direction with reference to FIG. 4A) with respect to the AF structure 360 using electromagnetic force acting between the first OIS magnet 422 and the first OIS coil 424.

In an embodiment, the first OIS back yoke 421 may adjust the direction of magnetic flux of the first OIS magnet 422. In an embodiment, the first OIS yoke 423 may pull the first OIS magnet 422 toward the AF structure 360 so as to allow the OIS structure 340 to be held in position on the AF structure 360.

In an embodiment, at least one first OIS magnet detection sensor 425 may detect the position of the OIS structure 340. For example, at least one first OIS magnet detection sensor 425 may include at least one driving IC (not illustrated). In an embodiment, the first OIS magnet detection sensor 425 may be configured integrally with the driving IC. The driving IC (not illustrated) may control current passing through the first OIS coil 424 to change electromagnetic force between the first OIS magnet 422 and coils (e.g., the first OIS coil 424), so as to control the OIS structure 340 and/or the middle guide 350 to move in a direction substantially perpendicular to the optical axis (e.g., the Y-axis direction of FIG. 4A).

In an embodiment, the first OIS magnet detection sensor 425 may detect the position of the OIS structure 340 on the X-axis according to the movement of the OIS structure 340 in the X-axis direction through the second OIS actuator 430. In an embodiment, the first OIS magnet detection sensor 425 may be positioned between two coils constituting the first OIS coil 424 to detect an amount by which the OIS structure 340 moves in the +X direction or the -X direction, and to detect the amount of movement of the OIS structure 340 in the X-axis direction. In an embodiment, the first OIS magnet detection sensor 425 may detect the position of the OIS structure 340 on the Y-axis according to the movement of the OIS structure 340 in the Y-axis direction via the first OIS actuator 420. In an embodiment, the first OIS magnet detection sensor 425 may be positioned at a center of one of two coils constituting the first OIS coil 424 to detect an amount by which the OIS structure 340 moves in the +Y direction or the -Y direction, and to detect the amount of movement of the OIS structure 340 in the Y-axis direction. In addition, the first OIS magnet detection sensor 425 may detect the position of the OIS structure 340 on the X-axis or the Y-axis in various ways.

According to an embodiment, the second OIS actuator 430 may include a second OIS back yoke 431, a second OIS magnet 432, a second OIS yoke 433, a second OIS coil 434, and at least one second OIS magnet detection sensor 435.

In an embodiment, the second OIS actuator 430 may be at least partially disposed in the camera housing 370 and the OIS structure 340. In an embodiment, one component of the second OIS actuator 430 may be disposed on the second OIS guide portion 342 so as to move the OIS structure 340 in the X-axis direction. For example, the second OIS back yoke 431 and the second OIS magnet 432 may be sequentially disposed on the first OIS guide portion 342. On the third surface 373 of the camera housing 370 facing the second OIS guide portion 342, the second OIS coil 434 and the second OIS yoke 433 may be sequentially disposed. The OIS structure 340 may move in a direction (e.g., the X-axis direction with reference to FIG. 4A) substantially perpendicular to the optical axis (e.g., the Z-axis direction with reference to FIG. 4A) with respect to the AF structure 360 using electromagnetic force acting between the second OIS magnet 432 and the second OIS coil 434.

In an embodiment, the second OIS back yoke 431 may adjust the direction of the magnetic flux of the second OIS magnet 432. In an embodiment, the second OIS yoke 433 may pull the second OIS magnet 432 toward the AF structure 360 so as to allow the OIS structure 340 to be held in position on the AF structure 360.

In an embodiment, at least one second OIS magnet detection sensor 435 may detect the position of the OIS structure 340. For example, at least one second OIS magnet detection sensor 435 may include at least one driving IC (not illustrated). In an embodiment, the second OIS magnet detection sensor 435 may be configured integrally with the driving IC. The driving IC may control current passing through the second OIS coil 434 to change electromagnetic force between the second OIS magnet 432 and coils (e.g., the second OIS coil 434), so as to control the OIS structure 340 and/or the middle guide 350 to move in a direction substantially perpendicular to the optical axis (e.g., the X-axis direction of FIG. 4A).

In an embodiment, the second OIS magnet detection sensor 435 may detect the position of the OIS structure 340 on the Y-axis according to the movement of the OIS structure 340 in the Y-axis direction via the first OIS actuator 420. In an embodiment, the second OIS magnet detection sensor 435 may be positioned between two coils constituting the second OIS coil 434 to detect an amount by which the OIS structure 340 moves in the +Y direction or the -Y direction, and to detect the amount of movement of the OIS structure 340 in the Y-axis direction. In an embodiment, the second OIS magnet detection sensor 435 may detect the position of the OIS structure 340 on the X-axis according to the movement of the OIS structure 340 in the X-axis direction through the second OIS actuator 430. In an embodiment, the second OIS magnet detection sensor 435 may be positioned at a center of one of two coils constituting the second OIS coil 434 to detect an amount by which the OIS structure 340 moves in the +X direction or the -X direction, and to detect the amount of movement of the OIS structure 340 in the X-axis direction. In addition, the second OIS magnet detection sensor 435 may detect the position of the OIS structure 340 on the X-axis or the Y-axis in various ways.

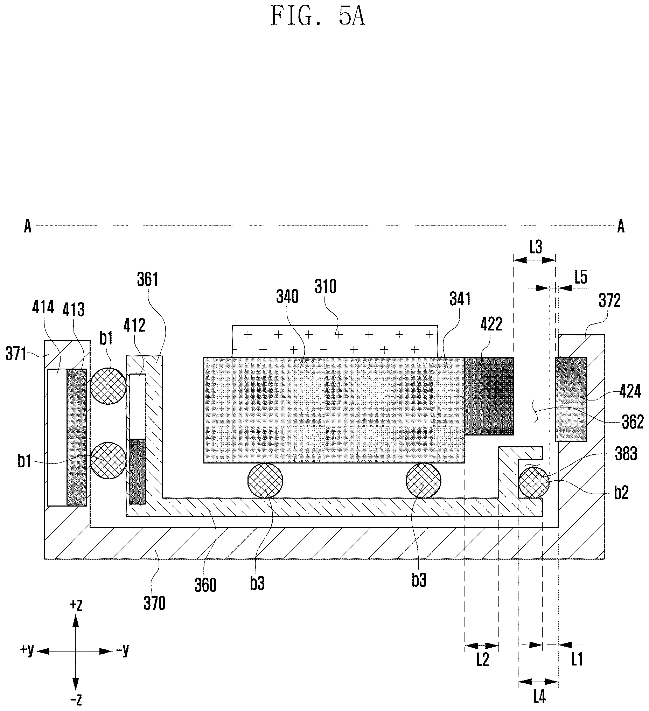

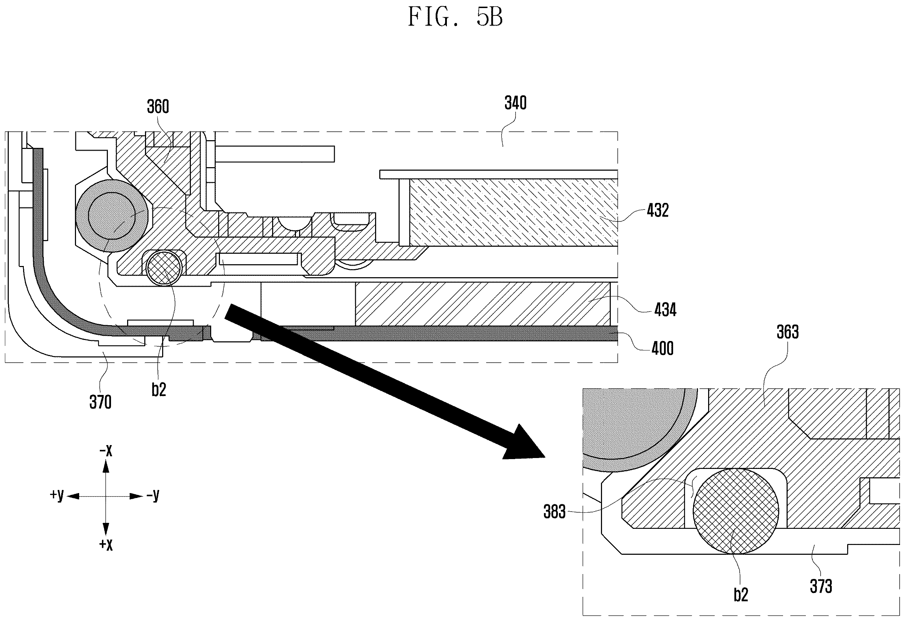

According to an embodiment, the AF structure 360 may be configured such that the AF guide portion 361, which is in contact with the first AF balls b1 to be movable in the optical axis direction (e.g., the Z-axis direction of FIG. 5A) with respect to the camera housing 370, and the remaining side surface area 362, 363, 364 may be spaced apart by a predetermined distance from one side surface of the camera housing 370 (e.g., the first surface 371, the second surface 372, the third surface 373, and/or the fourth surface 374). In an embodiment, the OIS structure 340 may be disposed in the AF structure 360 to be spaced apart by a predetermined distance from one side surface of the AF structure 360 (e.g., the first AF guide portion 361 and/or the remaining side surface area 362, 363, 364) so as to move in a direction substantially perpendicular to the optical axis with respect to the AF structure 360. In an embodiment, magnets disposed on the OIS structure 340 (e.g., the first OIS magnet 422 and/or the second OIS magnet 432) may be spaced apart by a predetermined distance from the camera housing 370 so as not to be in contact with OIS coils disposed on the camera housing 370 (e.g., the first OIS coil 424 and/or the second OIS coil 434) in a state in which the camera housing 370 and the AF structure 360 approach or come into contact with each other due to an impact applied to the camera module 300. In an embodiment, the first OIS magnet 422 disposed on the first OIS guide portion 341 of the OIS structure 340 may be spaced apart by a predetermined distance from the camera housing 370 so as not to be in contact with the first OIS coil 424 disposed on the second surface 372 of the camera housing 370. In an embodiment, referring to FIG. 5B, the second OIS magnet 432 disposed on the second OIS guide portion 342 of the OIS structure 340 may be spaced apart by a predetermined distance from the camera housing 370 so as not to be in contact with the second OIS coil 434 disposed on the third surface 373 of the camera housing 370.

Meanwhile, when an external impact (e.g., dropping of an electronic device 101) is applied to the camera module 300, the AF structure 360 may collide with one side surface of the camera housing 370. For example, when an external impact is applied to the camera module 300, the AF structure 360 may move in the -Y direction as illustrated in FIG. 3 and collide with the second surface 372 of a camera housing 370. In this case, at least one of the AF structure 360 and the camera housing 370 may be damaged. In addition, the OIS structure 340 may move in the -Y direction as the AF structure 360 moves in the -Y direction as illustrated in FIG. 3. In this case, the first OIS magnet 422 and the first OIS coil 424 may collide with each other, and at least one of the first OIS magnet 422 and the first OIS coil 424 may be damaged. In an embodiment, when an external impact is applied to the camera module 300, the AF structure 360 may move in the +X direction as illustrated in FIG. 3 and collide with a third surface of the camera housing 370. In this case, at least one of the AF structure 360 and the camera housing 370 may be damaged. In addition, the OIS structure 340 may move in the +X direction as the AF structure 360 moves in the +X direction as illustrated in FIG. 3. In this case, the second OIS magnet 432 and the second OIS coil 434 may collide with each other, and at least one of the second OIS magnet 432 and the second OIS coil 434 may be damaged.

In an embodiment, the first OIS magnet 422 may be spaced apart from the first OIS coil 424 by a sufficient distance (e.g., L3 of FIG. 5A) so as not to collide with the first OIS coil 424. In an embodiment, when an external impact is applied to the camera module 300 and the AF structure 360 moves in the -Y direction, the distance between the AF structure 360 and the camera housing 370 (e.g., L1 of FIG. 5A) may be reduced. In addition, as the OIS structure 340 moves in the -Y direction through the movement of the AF structure 360, the distance between the OIS structure 340 and the AF structure 360 (e.g., L2 of FIG. 5A) may be reduced. When the distance between the first OIS magnet 422 and the first OIS coil 424 is less than or equal to the distance between the AF structure 360 and the camera housing 370 and the distance between the AF structure 360 and the OIS structure 340, the first OIS magnet 422 may collide with the first OIS coil 424. Accordingly, the distance between the first OIS magnet 422 and the first OIS coil 424 may be greater than the distance between the AF structure 360 and the camera housing 370 and the distance between the AF structure 360 and the OIS structure 340.

In an embodiment, the distance between the first OIS magnet 422 and the first OIS coil 424 may be configured such that the first OIS magnet 422 and the first OIS coil 424 are not in contact with each other in a state in which the first OIS guide portion 341 of the OIS structure 340 is in contact with the AF structure 360 and the first side surface 362 of the AF structure 360 is in contact with the camera housing 370. For example, when an impact is applied to a camera module 300 to bring the first OIS guide portion 341 of the OIS structure 340 into contact with the AF structure 360 and the first side surface 362 of the AF structure 360 into contact with the camera housing 370, the first OIS magnet 422 and the first OIS coil 424 may not be in contact with each other. However, as the distance between the first OIS magnet 422 and the first OIS coil 424 increases, the magnitude of electromagnetic force between the first OIS magnet 422 and the first OIS coil 424 may decrease, which may reduce the driving force of the OIS structure 340. When the distance between the AF structure 360 and the camera housing 370 is reduced so as to secure electromagnetic force between the first OIS magnet 422 and the first OIS coil 424 to a certain level, the AF structure 360 may come into contact with the camera housing 370 while moving in the optical axis direction.

Similarly, the second OIS magnet 432 may be spaced apart from the second OIS coil 434 by a sufficient distance so as not to collide with the second OIS coil 434. In an embodiment, when an external impact is applied to the camera module 300 and the AF structure 360 moves in the +X direction, the distance between the AF structure 360 and the camera housing 370 may be reduced. In addition, as the OIS structure 340 moves in the +X direction through the movement of the AF structure 360, the distance between the OIS structure 340 and the AF structure 360 may be reduced. In such a case, when the distance between the second OIS magnet 432 and the second OIS coil 434 is less than or equal to the distance between the AF structure 360 and the camera housing 370 and the distance between the AF structure 360 and the OIS structure 340, the second OIS magnet 432 may collide with the second OIS coil 434. Accordingly, the distance between the second OIS magnet 432 and the second OIS coil 434 may be greater than the distance between the AF structure 360 and the camera housing 370 and the distance between the AF structure 360 and the OIS structure 340. In an embodiment, the distance between the second OIS magnet 432 and the second OIS coil 434 may be configured such that the second OIS magnet 432 and the second OIS coil 434 are not in contact with each other in a state in which the second OIS guide portion 342 of the OIS structure 340 is in contact with the AF structure 360 and the second side surface 362 of the AF structure 360 is in contact with the camera housing 370. For example, when an impact is applied to a camera module 300 to bring the second OIS guide portion 342 of the OIS structure 340 into contact with the AF structure 360 and the second side surface 362 of the AF structure 360 into contact with the camera housing 370, the second OIS magnet 432 and the second OIS coil 434 may not be in contact with each other. However, as the distance between the second OIS magnet 432 and the second OIS coil 434 increases, the magnitude of electromagnetic force between the second OIS magnet 432 and the second OIS coil 434 may decrease, which may reduce the driving force of the OIS structure 340. When the distance between the AF structure 360 and the camera housing 370 is reduced so as to secure electromagnetic force between the second OIS magnet 432 and the second OIS coil 434 to a certain level, the AF structure 360 may come into contact with the camera housing 370 while moving in the optical axis direction.

According to an embodiment of the disclosure, when an impact is applied to the camera module 300, a structure for alleviating collision between the AF structure 360 and the camera housing 370 may be provided. For example, the second AF balls b2 may be disposed between the side surface area 362, 363, 364 of the AF structure 360 and the camera housing 370. The second AF balls b2 may prevent a direct collision between the AF structure 360 and the camera housing 370 when an external impact is applied to the camera module 300. In addition, the distance between the AF structure 360 and the camera housing 370 may be reduced by a space occupied by the second AF balls b2. For example, when an impact is applied to the camera module 300, the distance by which the AF structure 360 is movable toward the camera housing 370 (e.g., L5 of FIG. 5A) may be reduced. As the distance by which the AF structure 360 is movable with respect to the camera housing 370 is reduced, an acceleration section in which the AF structure 360 moves toward the camera housing 370 may be reduced, which may reduce an impact between the AF structure 360 and the camera housing 370. In addition, as the distance by which the AF structure 360 is movable toward the camera housing 370 (e.g., L5 of FIG. 5A) is reduced by the second AF balls b2, the distance between OIS magnets 422 and 432 and OIS coils 424 and 434 may be reduced compared to a case in which the second AF balls b2 are not disposed between the camera housing 370 and the AF structure 360. Accordingly, the magnitude of electromagnetic force acting between the OIS coils 424 and 434 disposed on the camera housing 370 and the OIS magnets 422 and 432 disposed on the OIS structure 340 may be increased, which may increase a driving force for moving the OIS structure 340. A detailed description of the second AF balls b2 will be given below.

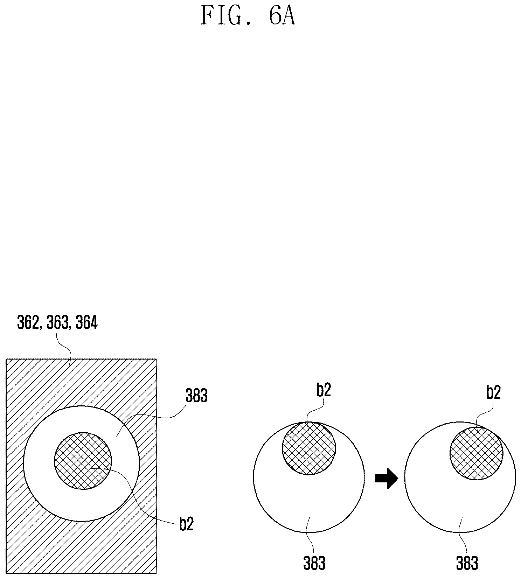

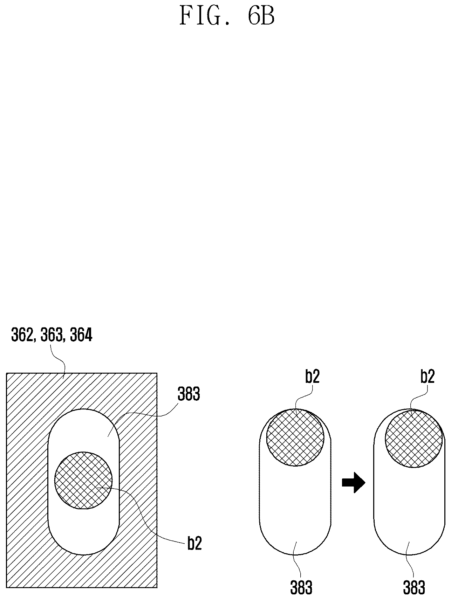

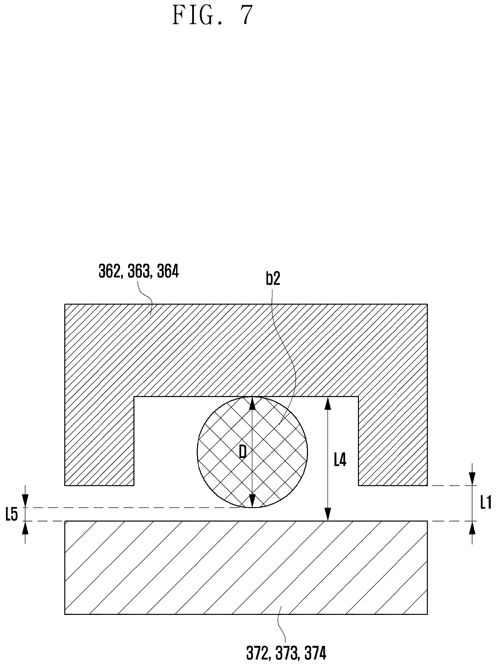

FIG. 5A is a cross-sectional view taken along line A-A of FIG. 3, according to an embodiment of the disclosure. FIG. 5B is a view illustrating a second AF ball b2 disposed between the AF structure 360 and the camera housing 370 of an embodiment of the disclosure. FIGS. 6A and 6B are views illustrating a seating groove 383 formed in the AF structure 360, according to an embodiment of the disclosure. FIG. 7 is a view illustrating a distance between one surface of the seating groove 383 formed in the AF structure 360 and the camera housing 370, according to an embodiment of the disclosure.

According to an embodiment, as illustrated in FIGS. 5A and 5B, the second AF ball b2 may be disposed between the AF structure 360 and the camera housing 370. In an embodiment, the second AF balls b2 may be disposed between the side surface area 362, 363, 364 of the AF structure 360 and the surfaces of the camera housing 370 corresponding thereto (the second surface 372, the third surface 373, and the fourth surface 374). For example, at least one of the second AF balls b2 may be disposed between the first side surface 362 of the AF structure 360 and the second surface 372 of the camera housing 370 and/or at least one of the second AF ball b2 may be disposed between the second side surface 363 of the AF structure 360 and the third surface 373 of the camera housing 370. In an embodiment, when the third OIS actuator (not illustrated) is disposed between the third OIS guide portion 343 of the OIS structure 340 and the fourth surface 374 of the camera housing 370, at least one of the second AF balls b2 may be disposed between the third side surface 364 of the AF structure 360 and the fourth surface 374 of the camera housing 370. In an embodiment, even when the camera module 300 (e.g., the camera module 180 of FIG. 2) includes only the first OIS actuator 420 and the second OIS actuator 430 for performing an optical image stabilizer function, at least one of the second AF ball b2 may be disposed between the third side surface 364 of the AF structure 360 and the fourth surface 374 of the camera housing 370.

In an embodiment, the second AF balls b2 may be disposed in the seating groove 383 formed in at least one of the AF structure 360 and the camera housing 370. In an embodiment, referring to FIGS. 3, 5A, and 5B, the seating groove 383 may be formed in at least one of the first side surface 362, the second side surface 363, and/or the third side surface 364 of the AF structure 360. In an embodiment, the seating groove 383 may be formed in the second surface 372 of the camera housing 370 facing the first side surface 362 of the AF structure 360, in the third surface 373 facing the second side surface 363, and/or in the fourth surface 374 facing the third side surface 364. In an embodiment, the seating groove 383 may be formed between the first side surface 362 of the AF structure 360 and the second surface 372 of the camera housing 370, between the second side surface 363 of the AF structure 360 and the third surface 373 of the camera housing 370, and/or between the third side surface 364 of the AF structure 360 and the fourth surface 374 of the camera housing 370. Hereinafter, for convenience of description, the seating groove 383 will be described on the premise that it is formed in the AF structure 360. However, as described above, the seating groove 383 may be formed in the AF structure 360 and/or the camera housing 370.

In an embodiment, the seating groove 383 may be formed at opposite sides of OIS magnets (e.g., opposite sides in the X-axis direction and/or opposite sides in the Y-axis direction) with respect to the OIS actuators 420 and 430. In an embodiment, referring to FIGS. 3 and 5A, the second AF balls b2 may be provided on the first side surface 362 of the AF structure 360 so as to be positioned at opposite sides of the first OIS magnet 422 (e.g., opposite sides in an X-axis direction) with respect to the first OIS actuator 420. In an embodiment, at least one seating groove 383 may be formed on the first side surface 362 of the AF structure 360. For example, referring to FIG. 3, four seating grooves 383 may be formed at vertices of the first side surface 362 of the AF structure 360. The second AF balls b2 may be disposed in the seating grooves 383 such that at least one of the second AF balls b2 is positioned between the first side surface 362 of the AF structure 360 and the second surface 372 of the camera housing 370. In an embodiment, referring to FIGS. 3 and 5B, the second AF balls b2 may be provided on the second side surface 363 of the AF structure 360 so as to be positioned at opposite sides of the second OIS magnet 432 (e.g., opposite sides in the Y-axis direction) with respect to the second OIS actuator 430. In an embodiment, at least one seating groove 383 may be formed on the second side surface 363 of the AF structure 360. For example, referring to FIG. 3, four seating grooves 383 may be positioned at vertices of the second side surface 363 of the AF structure 360. As the second AF balls b2 are disposed in the seating grooves 383, at least one of the second AF balls b2 may be positioned between the second side surface 363 of the AF structure 360 and the third surface 373 of the camera housing 370.

According to an embodiment, the second AF balls b2 may be in contact with the AF structure 360 and the camera housing 370. The AF structure 360 may move in the optical axis direction (e.g., the Z-axis direction of FIG. 5A) with respect to the camera housing 370 by electromagnetic force generated from the AF actuator 410. The second AF balls b2 may roll against the camera housing 370 so as to block direct contact between the AF structure 360 and the camera housing 370.

According to an embodiment, as illustrated in FIGS. 6A and 6B, the seating groove 383 may be formed in various shapes. The seating groove 383 may be formed in a curved surface shape so as to allow the second AF balls b2 to roll inside the seating groove 383. In an embodiment, the seating groove 383 may be formed in a size accommodating the second AF balls b2 and may be at least partially formed as a curved surface. In an embodiment, referring to FIGS. 6A and 6B, the seating groove 383 may be formed as a curved surface in which at least a portion of a cross-section is substantially circular. In this case, when the AF structure 360 moves in the optical axis direction with respect to the camera housing 370 in a state in which the second AF balls b2 are in contact with the camera housing 370, frictional resistance in the optical axis direction may be reduced as the second AF balls b2 roll along the inner curved surface of the seating groove 383.

According to an embodiment, a friction lubrication material (e.g., grease) for reducing frictional resistance of the second AF balls b2 may be disposed in or applied to the seating groove 383. Accordingly, the second AF balls b2 may be prevented from being damaged by friction inside the seating groove 383 through the lubrication material.

According to an embodiment, as illustrated in FIGS. 5A and 7, the distance between the AF structure 360 and the camera housing 370 may be reduced by a space occupied by the second AF ball b2 between the AF structure 360 and the camera housing 370. In an embodiment, when an external impact is applied to the camera module 300, the AF structure 360 may move with respect to the camera housing 370 by a distance L5 obtained by subtracting a space occupied by the second AF ball b2 from a distance L4 (e.g., the distance L4 of FIG. 5A) between one surface positioned inside the seating groove 383 and the camera housing 370. For example, referring to FIGS. 5A and 7, when an external impact is applied to the camera module 300, the AF structure 360 may move with respect to the camera housing 370 by a distance L5 obtained by subtracting the diameter D of the second AF ball b2 from the distance L4 between one surface of the seating groove 383 and the camera housing 370. Accordingly, compared to a case in which the second AF ball b2 is not disposed, the movement distance of the AF structure 360 with respect to the camera housing 370 may be reduced when an impact is applied to the camera module 300. As the distance by which the AF structure 360 is movable with respect to the camera housing 370 is reduced, an acceleration section in which the AF structure 360 moves toward the camera housing 370 may be reduced, which may reduce an impact between the AF structure 360 and the camera housing 370.

In an embodiment, a distance L3 between the first OIS magnet 422 and the first OIS coil 424 may be reduced as the distance by which the AF structure 360 is movable with respect to the camera housing 370 is reduced by the second AF ball b2. Similarly, the distance between the second OIS magnet 432 and the second OIS coil 434 may be reduced as the distance between the AF structure 360 and the camera housing 370 is reduced by the second AF ball b2. Accordingly, compared to a case in which the second AF ball b2 is not disposed between the AF structure 360 and the camera housing 370, intensity of electromagnetic force acting between the OIS coils 424 and 434 and the OIS magnets 422 and 432 may be increased, thereby increasing driving force of the OIS structure 340.

In an embodiment, referring to FIG. 7, the distance L1 between the AF structure 360 and the camera housing 370 may be determined depending on the size of the second AF ball b2. In an embodiment, the distance L1 between the AF structure 360 and the camera housing 370 may be formed to be smaller than the diameter D of the second AF ball b2 such that the second AF ball b2 is not released from the seating groove 383 through the distance L1 between the AF structure 360 and the camera housing 370. In an embodiment, the distance L1 between the AF structure 360 and the camera housing 370 may be smaller than the radius of the second AF ball b2.

The above description has been made on the premise that the OIS structure 340 is disposed in the AF structure 360 of the camera module 300, but the disclosure is not limited thereto. In an embodiment, the camera module 300 may not include the OIS structure 340. Even in this case, the second AF ball b2 may be disposed between the camera housing 370 and the AF structure 360 so as to mitigate collision between the AF structure 360 and the camera housing 370 when an impact is applied to the camera module 300. In an embodiment, as described above, the distance between the AF structure 360 and the camera housing 370 may be reduced by the space occupied by the second AF ball b2 between the AF structure 360 and the camera housing 370. Accordingly, compared to a case in which the second AF ball b2 is not disposed, the movement distance of the AF structure 360 with respect to the camera housing 370 may be reduced when an impact is applied to the camera module 300. As the distance by which the AF structure 360 is movable with respect to the camera housing 370 is reduced, an acceleration section in which the AF structure 360 moves toward the camera housing 370 may be reduced, which may reduce an impact between the AF structure 360 and the camera housing 370.

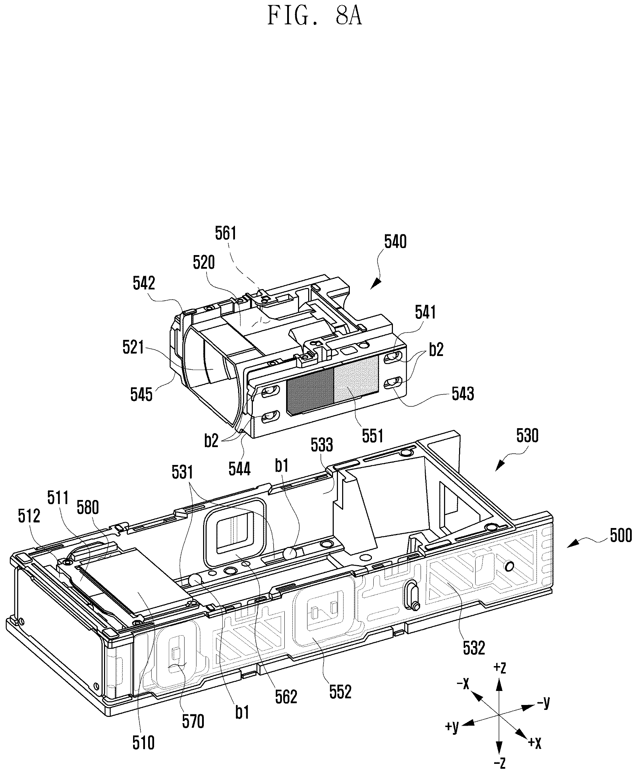

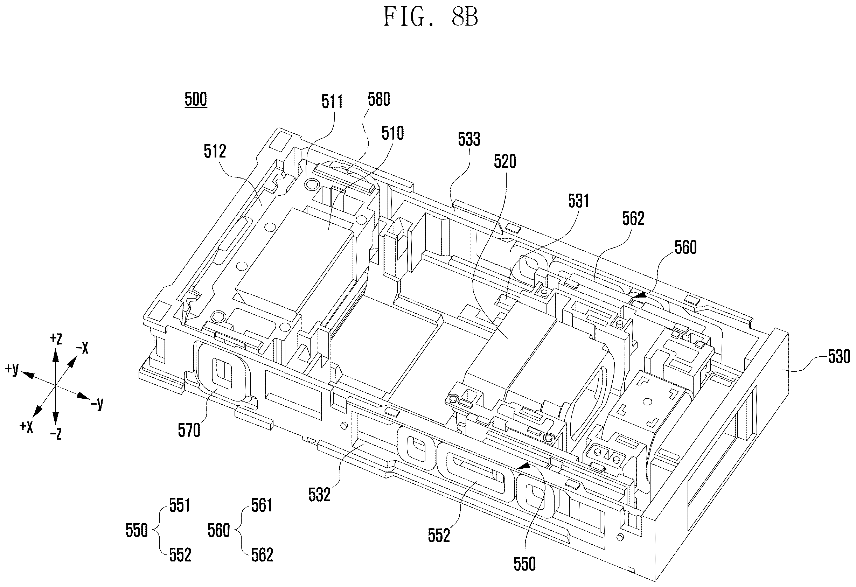

FIG. 8A is a view illustrating a state in which an AF structure assembled with a lens assembly is coupled to a camera housing according to an embodiment. FIG. 8B is a perspective view illustrating coupling of a lens assembly, an AF structure, and a camera housing illustrated in FIG. 8A.

Hereinafter, a camera module 500 may be another example different from the camera module 300 described in FIG. 3. In an embodiment, the camera module 500 illustrated in FIGS. 8A and 8B may be a camera module utilizing refraction of light. For example, the camera module 500 may be a camera module in which a lens of the lens assembly and an image sensor of the camera module are disposed vertically. Light refracted through a prism may be transmitted to the image sensor through the lens of the lens assembly.

In the following description, redundant descriptions for components identical or similar to those described in FIGS. 3 to 7 will be omitted.

According to an embodiment, as illustrated in FIGS. 8A and 8B, the camera module 500 may include a prism 510, a prism carrier 511, a middle guide 512, a lens assembly 520, a camera housing 530, a ball guide 531 (e.g., the first guide groove 381 of FIG. 3), an AF structure 540, a first AF actuator 550, and/or a second AF actuator 560. At least one of the above-described components may be omitted or another component may be added.

In an embodiment, the camera module 500 may adjust focus by controlling the first AF actuator 550 and the second AF actuator 560 via a processor 120. In an embodiment, the first AF actuator 550 may include a first AF magnet 551 disposed on a first AF guide portion 541 of the AF structure 540 and a first AF coil 552 disposed on a first surface 532 of the camera housing 530. The AF structure 540 may move in the Y-axis direction with respect to the camera housing 530 using electromagnetic force acting between the first AF magnet 551 and the first AF coil 552 so as to adjust a focus of a lens 521 disposed in the lens assembly 520. In an embodiment, the second AF actuator 560 may include a second AF magnet 561 disposed on the AF structure 540 to face the first AF magnet 551, and a second AF coil 562 disposed on the camera housing 530 to face the first AF coil 552. In an embodiment, the second AF magnet 561 may be disposed on a second AF guide portion 542 of the AF structure 540. The second AF coil 562 may be disposed on a second surface 533 of the camera housing 530. The AF structure 540 may move in the Y-axis direction with respect to the camera housing 530 using electromagnetic force acting between the second AF magnet 561 and the second AF coil 562 so as to adjust a focus of a lens 521 disposed in the lens assembly 520.

According to an embodiment, the camera module 500 may compensate for shaking of an image (e.g., perform optical image stabilization (OIS)) by controlling a first rotation actuator 570 and/or a second rotation actuator 580 via the processor 120. For example, in an embodiment, the prism carrier 511 may rotate with respect to the camera housing 530 by the first rotation actuator 570 and/or the second rotation actuator 580 to compensate for shaking of an image. For example, the prism carrier 511 may rotate about the X-axis or the Y-axis with reference to FIG. 8A to compensate for shaking of an image.

In an embodiment, the first rotation actuator 570 may include a first rotation magnet (not illustrated) disposed on the prism carrier 511 and a first rotation coil (not illustrated) disposed on the first surface 532 of the camera housing 530. In an embodiment, the second rotation actuator 580 may include a second rotation magnet (not illustrated) disposed on the prism carrier 511 and a second rotation coil (not illustrated) disposed on the second surface 533 of the camera housing 530. In an embodiment, the prism carrier 511 may rotate with respect to the camera housing 530 using electromagnetic force acting between the first rotation magnet and the first rotation coil and/or electromagnetic force acting between the second rotation magnet and the second rotation coil so as to compensate for shaking of an image.

In an embodiment, the prism carrier 511 may be a housing configured to accommodate the prism 510. In an embodiment, light received in the camera module 500 may be refracted through the prism 510, pass through the lens 521 of the lens assembly 520, and be reflected to an image sensor (not illustrated).

In an embodiment, the middle guide 512 may prevent the prism carrier 511 from moving in another direction when the prism carrier 511 rotates about the X-axis or the Y-axis with reference to FIG. 8A.

In an embodiment, the AF structure 540 may move in the Y-axis direction with respect to the camera housing 530 via the first AF ball b1. In an embodiment, the first AF ball b1 may be disposed in the ball guide 531 extending in the Y-axis direction on the camera housing 530. The first AF ball b1 may be arranged in the Y-axis direction in the ball guide 531 so as to guide movement of the AF structure 540 with respect to the camera housing 530. In an embodiment, the first AF ball b1 may be in contact with a side surface area 544, 545 of the AF structure 540. In an embodiment, the side surface area 544, 545 of the AF structure 540 may be one surface of the AF structure 540 facing the camera housing 530. For example, the first AF ball b1 may be in contact with the first side surface 544 and the second side surface 545 of the AF structure 540 so as to guide movement of the AF structure 540 in the Y-axis direction.

According to an embodiment, as illustrated in FIGS. 8A and 8B, second AF balls b2 may be disposed between the AF structure 540 and the camera housing 530. In an embodiment, the second AF balls b2 and the seating grooves 543 described with reference to FIGS. 8A and 8B may be identical or similar to the second AF balls b2 and the seating grooves 383 described with reference to FIGS. 3 to 7.

In an embodiment, the second AF balls b2 may be disposed on the first AF guide portion 541 and the second AF guide portion 542 of the AF structure 540 around the first AF magnet 551 disposed on the AF structure 540. In an embodiment, the second AF balls b2 may be disposed on the first AF guide portion 541 and the second AF guide portion 542 of the AF structure 540 around the second AF magnet 561 disposed on the AF structure 540.

In an embodiment, the second AF balls b2 may be disposed in the seating groove 543 formed in at least one of the AF structure 540 and the camera housing 530. In an embodiment, the seating grooves 543 may be formed in at least one of the first AF guide portion 541 and/or the second AF guide portion 542 of the AF structure 540. In an embodiment, the seating grooves 543 may be formed in the first surface 532 of the camera housing 530 facing the first AF guide portion 541 of the AF structure 540 and in the second surface 533 of the camera housing 530 facing the second AF guide portion 542 of the AF structure 540. In an embodiment, the seating grooves 543 may be formed between the first AF guide portion 541 of the AF structure 540 and the first surface 532 of the camera housing 530 and/or between the second AF guide portion 542 of the AF structure 540 and the second surface 533 of the camera housing 530. Hereinafter, for convenience of description, the seating groove 543 will be described on the premise that it is formed in the AF structure 540.

In an embodiment, the AF structure 540 may be disposed in the camera housing 530 to be spaced apart from the first surface 532 and the second surface 533 of the camera housing 530 so as to move in the Y-axis direction.

In an embodiment, the second AF balls b2 may be disposed in the seating grooves 543 of the AF structure 540 to be positioned between the AF structure 540 and the camera housing 530. In an embodiment, the distance between the AF structure 540 and the camera housing 530 may be reduced by the space occupied by the second AF balls b2 between the AF structure 540 and the camera housing 530.

In an embodiment, when an external impact is applied to the camera module 500, the AF structure 540 may move with respect to the camera housing 530 only by a distance excluding the space occupied by the second AF balls b2 from the distance between one surface inside each seating groove 543 and the camera housing 530 (e.g., the distance L5 of FIG. 5A). For example, when an external impact is applied to the camera module 500, the AF structure 540 may move with respect to the camera housing 530 in the +X direction or -X direction of FIG. 8A by a distance excluding a diameter D of the second AF balls b2 from a distance between one surface of each seating groove 543 and the camera housing 530. Accordingly, compared to a case in which the second AF ball b2 is not disposed, the movement distance of the AF structure 540 with respect to the camera housing 530 may be reduced when an impact is applied to the camera module 500. As the distance by which the AF structure 540 is movable with respect to the camera housing 530 is reduced, an acceleration section in which the AF structure 540 moves toward the camera housing 530 may be reduced, which may reduce an impact between the AF structure 540 and the camera housing 530.

In an embodiment, the distance between the first AF magnet 551 and the first AF coil 552 may be configured such that the first AF magnet 551 and the first AF coil 552 are not in contact with each other while the first guide portion 541 of the AF structure 540 and the first surface 532 of the camera housing 530 are in contact. For example, the distance between the first AF magnet 551 and the first AF coil 552 may be configured such that the first AF magnet 551 and the first AF coil 552 are not in contact with each other when an impact is applied to the camera module 500 in a state in which the second AF balls b2 are not disposed between the camera housing 530 and the AF structure 540, and the first guide portion 541 of the AF structure 540 and the first surface 532 of the camera housing 530 are in contact.

In an embodiment, when the second AF balls b2 are disposed between the first guide portion 541 of the AF structure 540 and the first surface 532 of the camera housing 530, the distance between the first AF magnet 551 and the first AF coil 552 may be reduced compared to a case in which the second AF balls b2 are not disposed between the first guide portion 541 of the AF structure 540 and the first surface 532 of the camera housing 530. In an embodiment, when an impact is applied to the camera module 500 in a state in which the second AF balls b2 are disposed between the first surface 532 of the camera housing 530 and the first guide portion 541 of the AF structure 540, a distance by which the AF structure 540 may move toward the camera housing 530 may be reduced by the space occupied by the second AF balls b2. Accordingly, compared to a case in which the second AF balls b2 are not disposed between the camera housing 530 and the AF structure 540, the distance between the first AF magnet 551 and the first AF coil 552 may be reduced. As the distance between the first AF magnet 551 and the first AF coil 552 is reduced, the strength of electromagnetic force acting between the first AF magnet 551 and the first AF coil 552 may increase, thereby increasing driving force for moving the AF structure 540.

In an embodiment, the distance between the second AF magnet 561 and the second AF coil 562 may be configured such that the second AF magnet 561 and the second AF coil 562 are not in contact with each other while the second guide portion 542 of the AF structure 540 and the second surface 533 of the camera housing 530 are in contact. For example, the distance between the second AF magnet 561 and the second AF coil 562 may be configured such that the second AF magnet 561 and the second AF coil 562 are not in contact with each other when an impact is applied to the camera module 500 in a state in which the second AF balls b2 are not disposed between the camera housing 530 and the AF structure 540, and the second guide portion 542 of the AF structure 540 and the second surface 533 of the camera housing 530 are in contact.

In an embodiment, when the second AF balls b2 are disposed between the second guide portion 542 of the AF structure 540 and the second surface 533 of the camera housing 530, the distance between the second AF magnet 561 and the second AF coil 562 may be reduced compared to a case in which the second AF balls b2 are not disposed between the second guide portion 542 of the AF structure 540 and the second surface 533 of the camera housing 530. In an embodiment, when an impact is applied to the camera module 500 in a state in which the second AF balls b2 are disposed between the second surface 533 of the camera housing 530 and the second guide portion 542 of the AF structure 540, a distance by which the AF structure 540 may move toward the camera housing 530 may be reduced by the space occupied by the second AF balls b2. Accordingly, compared to a case in which the second AF balls b2 are not disposed between the camera housing 530 and the AF structure 540, the distance between the second AF magnet 561 and the second AF coil 562 may be reduced. As the distance between the second AF magnet 561 and the second AF coil 562 is reduced, the strength of electromagnetic force acting between the second AF magnet 561 and the second AF coil 562 may increase, thereby increasing driving force for moving the AF structure 540.

According to various embodiments, the electronic device 101 may have an appearance of a bar type or a plate type, but is not limited thereto. For example, the illustrated electronic device 101 may be a portion of a foldable electronic device, a slidable electronic device, a stretchable electronic device, and/or a rollable electronic device. The terms "foldable electronic device," "slidable electronic device," "stretchable electronic device," and/or "rollable electronic device" may refer to an electronic device in which bending transformation of a display (e.g., the display module 160 in FIG. 1) is possible, so that the display can be at least partially folded, wound or rolled, at least partially expanded in area, and/or accommodated inside a housing. The foldable electronic device, the slidable electronic device, the stretchable electronic device, and/or the rollable electronic device may allow a user to use a screen display area in an expanded state by unfolding the display or exposing a greater area of the display to the outside depending on a user's needs.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities may be separately disposed in any other element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

It will be understood that, in addition to the above-disclosed embodiments, the disclosure also contemplates and includes embodiments based on combinations of any two or more of the above-disclosed embodiments and embodiments including any combination of the above-described features. That is, the absence of explicit an indication that two features may be combined or two embodiments may be combined does not mean that such combinations are not contemplated, but such combinations should be considered to be included herein.

According to an embodiment of the disclosure, an electronic device 101 may include a lens assembly 310, 520 (e.g., the lens assembly 310 of FIG. 4A and/or the lens assembly 520 of FIG. 8A) including at least one lens 311, 521 (e.g., the lens 311 of FIG. 4A and/or the lens 521 of FIG. 8A). The electronic device may further include an AF structure 360, 540 (e.g., the AF structure 360 of FIG. 4A and/or the AF structure 540 of FIG. 8A) in which at least a portion of the lens assembly is positioned, the AF structure being configured to move in an optical axis direction of the lens and including at least one auto focus (AF) guide portion 361, 541, 542 (e.g., the AF guide portion 361 of FIG. 4B, the first AF guide portion 541 of FIG. 8A, and/or the second AF guide portion 542 of FIG. 8A), and a side surface area 362, 363, 364, 544, 545 (e.g., the first side surface 362 of FIG. 4B, the second side surface 363 of FIG. 4B, the third side surface 364 of FIG. 4B, the first side surface 544 of FIG. 8A, and the second side surface 545 of FIG. 8A). The electronic device may further include a camera housing 370, 530 in which the AF structure is disposed. The electronic device may further include an AF magnet 412, 551, 561 (e.g., the AF magnet 412 of FIG. 4A, the first AF magnet 551 of FIG. 8A, and/or the second AF magnet 561 of FIG. 8A) disposed on the AF guide portion. The electronic device may further include an AF coil 413, 552, 562 (e.g., the AF coil 413 of FIG. 4A, the first AF coil 552 of FIG. 8A, and/or the second AF coil 562 of FIG. 8A) disposed on the camera housing to face the AF magnet. The electronic device may further include a first AF ball b1 disposed between the AF structure and the camera housing to guide movement of the AF structure with respect to the camera housing in the optical axis direction. The electronic device may further include at least one second AF ball b2 disposed between the AF structure and the camera housing.

The first AF ball may be disposed between the AF guide portion of the AF structure and the camera housing, and the second AF ball may be disposed between the side surface area of the AF structure and the camera housing.

The first AF ball may be disposed between the side surface area of the AF structure and the camera housing, and the second AF ball may be disposed between the AF guide portion of the AF structure and the camera housing.

The side surface area of the AF structure may include a first side surface 362 of the AF structure facing the AF guide portion, a second side surface 363 positioned between the AF guide portion and the first side surface 362, and a third side surface 364 facing the second side surface 363, and the second AF ball may be disposed between at least one of the first side surface, the second side surface, and the third side surface, and the camera housing.

At least one of the side surface area of the AF structure and the camera housing may include a seating groove 383 in which the second AF ball is disposed.

The second AF ball may be in contact with at least one of the camera housing and the AF structure.

The seating groove may be formed in a size to accommodate the second AF ball, and may include at least one of a flat surface and a curved surface.

A distance L4 between a surface of the AF structure in which the seating groove is formed and the camera housing may be equal to or less than a diameter D of the second AF ball.

A distance L1 between a surface of the AF structure in which the seating groove is formed and the camera housing may be equal to or less than a radius of the second AF ball.

The electronic device may further include an OIS structure 340 in which the lens assembly is disposed, the OIS structure being disposed on the AF structure and configured to move in a direction perpendicular to the optical axis with respect to the camera housing, the OIS structure including a first optical image stabilization (OIS) guide portion 341 facing one side surface among the side surfaces of the AF structure and a second OIS guide portion 342 facing another side surface among the side surfaces of the AF structure, a first OIS magnet 422 disposed on the first OIS guide portion, a second OIS magnet 432 disposed on the second OIS guide portion, a first OIS coil 424 disposed on the camera housing to face the first OIS magnet, a second OIS coil 434 disposed on the camera housing to face the second OIS magnet, and an OIS ball b3 disposed between the OIS structure and the AF structure to guide movement of the OIS structure in the direction perpendicular to the optical axis.

In addition, a distance L3 between the first OIS coil and the first OIS magnet may be greater than a value L5 obtained by subtracting a diameter D of the second AF ball from a distance L4 between one side surface area of the AF structure and the camera housing, and then adding a distance L2 between the first OIS guide portion of the OIS structure and the AF structure.

At least one of the AF guide portion of the AF structure and the camera housing may include a first guide groove 381 configured to extend along the optical axis direction, the first guide groove being configured such that the first AF ball is disposed therein.

According to an embodiment of the disclosure, a camera module 300, 500 (e.g., the camera module 300 of FIG. 4A and/or the camera module 500 of FIG. 8A) may include a lens assembly 310, 520 (e.g., the lens assembly 310 of FIG. 4A and/or the lens assembly 520 of FIG. 8A) including at least one lens 311, 521 (e.g., the lens 311 of FIG. 4A and/or the lens 521 of FIG. 8A). The electronic device may further include an AF structure 360, 540 (e.g., the AF structure 360 of FIG. 4A and/or the AF structure 540 of FIG. 8A) in which at least a portion of the lens assembly is positioned, the AF structure being configured to move in an optical axis direction of the lens and including at least one auto focus (AF) guide portion 361, 541, 542 (e.g., the AF guide portion 361 of FIG. 4B, the first AF guide portion 541 of FIG. 8A, and/or the second AF guide portion 542 of FIG. 8A), and a side surface area 362, 363, 364, 544, 545 (e.g., the first side surface 362 of FIG. 4B, the second side surface 363 of FIG. 4B, the third side surface 364 of FIG. 4B, the first side surface 544 of FIG. 8A, and the second side surface 545 of FIG. 8A). The electronic device may further include a camera housing 370, 530 in which the AF structure is disposed. The electronic device may further include an AF magnet 412, 551, 561 (e.g., the AF magnet 412 of FIG. 4A, the first AF magnet 551 of FIG. 8A, and/or the second AF magnet 561 of FIG. 8A) disposed on the AF guide portion. The electronic device may further include an AF coil 413, 552, 562 (e.g., the AF coil 413 of FIG. 4A, the first AF coil 552 of FIG. 8A, and/or the second AF coil 562 of FIG. 8A) disposed on the camera housing to face the AF magnet. The electronic device may further include a first AF ball b1 disposed between the AF structure and the camera housing to guide movement of the AF structure with respect to the camera housing in the optical axis direction. The electronic device may further include at least one second AF ball b2 disposed between the AF structure and the camera housing.

The first AF ball may be disposed between the AF guide portion of the AF structure and the camera housing, and the second AF ball may be disposed between the side surface area of the AF structure and the camera housing.

The first AF ball may be disposed between the side surface area of the AF structure and the camera housing, and the second AF ball may be disposed between the AF guide portion of the AF structure and the camera housing.

The side surface area of the AF structure may include a first side surface 362 of the AF structure facing the AF guide portion, a second side surface 363 positioned between the AF guide portion and the first side surface 362, and a third side surface 364 facing the second side surface, and the second AF ball may be disposed between at least one of the first side surface, the second side surface, and the third side surface, and the camera housing.

At least one of the side surface area of the AF structure and the camera housing may include a seating groove 383 in which the second AF ball is disposed, and a distance L1 between a surface of the AF structure in which the seating groove is formed and the camera housing may be equal to or less than a diameter D of the second AF ball.

A distance L4 between a surface of the AF structure in which the seating groove is formed and the camera housing may be equal to or less than a diameter D of the second AF ball.

The electronic device may further include an OIS structure 340 in which the lens assembly is disposed, the OIS structure being disposed on the AF structure and configured to move in a direction perpendicular to the optical axis with respect to the camera housing, the OIS structure including a first optical image stabilization (OIS) guide portion 341 facing the one side surface of the AF structure and a second OIS guide portion 342 facing the another side surface of the AF structure, a first OIS magnet 422 disposed on the first OIS guide portion, a second OIS magnet 432 disposed on the second OIS guide portion, a first OIS coil 424 disposed on the camera housing to face the first OIS magnet, a second OIS coil 434 disposed on the camera housing to face the second OIS magnet, and an OIS ball b3 disposed between the OIS structure and the AF structure to guide movement of the OIS structure in the direction perpendicular to the optical axis.

In addition, a distance L3 between the first OIS coil and the first OIS magnet may be greater than a value L5 obtained by subtracting a diameter D of the second AF ball from a distance L4 between one side surface area of the AF structure and the camera housing, and then adding a distance L2 between the first OIS guide portion of the OIS structure and the AF structure.

## Claims

1. An electronic device (101) comprising:
a lens assembly (310, 520) comprising at least one lens (311, 521);
an AF structure (360, 540) in which at least a portion of the lens assembly is positioned, the AF structure being configured to move in an optical axis direction of the at least one lens and comprising at least one auto focus (AF) guide portion (361, 541, 542) and a side surface area (362, 363, 364, 544, 545);
a camera housing (370, 530) in which the AF structure is disposed;
an AF magnet (412, 551, 561) disposed on the AF guide portion;
an AF coil (413, 552, 562) disposed on the camera housing and facing the AF magnet;
a first AF ball (b1) disposed between the AF structure and the camera housing, the first AF ball being configured to guide movement of the AF structure with respect to the camera housing in the optical axis direction; and
at least one second AF ball (b2) disposed between the AF structure and the camera housing.

2. The electronic device of claim 1, wherein the first AF ball is disposed between the AF guide portion of the AF structure and the camera housing, and
wherein the second AF ball is disposed between the side surface area of the AF structure and the camera housing.

3. The electronic device of claim 1, wherein the first AF ball is disposed between the side surface area of the AF structure and the camera housing, and
wherein the second AF ball is disposed between the AF guide portion of the AF structure and the camera housing.

4. The electronic device of claim 1, wherein the side surface area of the AF structure comprises a first side surface (362) of the AF structure facing the AF guide portion, a second side surface (363) positioned between the AF guide portion and the first side surface, and a third side surface (364) facing the second side surface, and
wherein the second AF ball is disposed between at least one surface selected from the first side surface, the second side surface, and the third side surface, and the camera housing.

5. The electronic device of claim 1, wherein at least one of the side surface area of the AF structure and the camera housing comprises a seating groove (383) in which the second AF ball is disposed.

6. The electronic device of claim 1, wherein the second AF ball is in contact with at least one of the camera housing and the AF structure.

7. The electronic device of claim 5, wherein the seating groove is configured to have a size accommodating the second AF ball and comprises a curved surface.

8. The electronic device of claim 5, wherein a distance (L4) between a surface of the AF structure in which the seating groove is formed and the camera housing is equal to or less than a diameter (D) of the second AF ball.

9. The electronic device of claim 8, wherein a distance (L1) between a surface of the AF structure in which the seating groove is formed and the camera housing is equal to or less than a radius of the second AF ball.

10. The electronic device of claim 1, further comprising:
an OIS structure (340) in which the lens assembly is disposed and which is disposed on the AF structure to move in a direction perpendicular to the optical axis with respect to the camera housing, the OIS structure comprising a first OIS (optical image stabilization) guide portion (341) facing one side surface among the side surfaces of the AF structure and a second OIS guide portion (342) facing another side surface among the side surfaces of the AF structure;
a first OIS magnet (422) disposed on the first OIS guide portion;
a second OIS magnet (432) disposed on the second OIS guide portion;
a first OIS coil (424) disposed on the camera housing and facing the first OIS magnet;
a second OIS coil (434) disposed on the camera housing and facing the second OIS magnet; and
an OIS ball (b3) disposed between the OIS structure and the AF structure and configured to guide movement of the OIS structure in a direction perpendicular to the optical axis.

11. The electronic device of claim 10, wherein a distance (L3) between the first OIS coil and the first OIS magnet is greater than a value (L5) obtained by subtracting a diameter (D) of the second AF ball from a distance (L4) between said one side surface of the AF structure and the camera housing, and then adding a distance (L2) between the first OIS guide portion of the OIS structure and the AF structure.

12. The electronic device of claim 2, wherein at least one of the AF guide portion of the AF structure and the camera housing comprises a first guide groove (381) configured to extend along the optical axis direction, the first guide groove being configured such that the first AF ball is disposed therein.

13. A camera module (300, 500) comprising:
a lens assembly (310, 520) comprising at least one lens (311, 521);
an AF structure (360, 540) in which at least a portion of the lens assembly is positioned, the AF structure being configured to move in an optical axis direction of the at least one lens and comprising at least one auto focus (AF) guide portion (361, 541, 542) and a side surface area (362, 363, 364, 544, 545);
a camera housing (370, 530) in which the AF structure is disposed;
an AF magnet (412, 551, 561) disposed on the AF guide portion;
an AF coil (413, 552, 562) disposed on the camera housing and facing the AF magnet;
a first AF ball (b1) disposed between the AF structure and the camera housing, the first AF ball being configured to guide movement of the AF structure with respect to the camera housing in the optical axis direction; and
at least one second AF ball (b2) disposed between the AF structure and the camera housing.

14. The camera module of claim 13, wherein the first AF ball is disposed between the AF guide portion of the AF structure and the camera housing, and
wherein the second AF ball is disposed between the side surface area of the AF structure and the camera housing.

15. The camera module of claim 13, wherein at least one of the side surface area of the AF structure and the camera housing comprises a seating groove (383) in which the second AF ball is disposed, and
wherein a distance (L1) between a surface of the AF structure in which the seating groove is formed and the camera housing is equal to or less than a diameter (D) of the second AF ball.
